# EUROPEAN PATENT SPECIFICATION

(11) **EP 3 354 445 B1**
(45) Date of publication and mention of the grant of the patent: **05.05.2021**
(21) Application number: 18162303.4
(22) Date of filing: 15.03.2013
(51) Int. Cl.: B29C 65/50, B65H 19/18, B29C 63/42, B29C 65/78, B29L 23/00, B29L 31/00

(54) **DEVICE AND METHOD FOR CONNECTING TWO ENDS OF TUBULAR FOILS**
VORRICHTUNG UND VERFAHREN ZUM VERBINDEN ZWEIER ENDEN ROHRFÖRMIGER FOLIEN
DISPOSITIF ET PROCÉDÉ POUR RACCORDER DEUX EXTRÉMITÉS DE FEUILLES TUBULAIRES

(30) Priority: 16.03.2012 NL 2008498
(43) Date of publication of application: 01.08.2018
(62) Divisional of application: 13713568.7
(73) Proprietor: Fuji Seal International, Inc., Osaka-shi, Osaka 532-0003 (JP)
(72) Inventor: VAN HECK, Marinus Antonius Leonarda, 5753 DB Deurne (NL)
(74) Representative: Hylarides, Paul Jacques

(56) References cited:
- JP-U- S6 097 797

## Description

The invention relates to a device and a method for connecting two ends of tubular foil by means of adhesive tape. The invention also relates to a controller arranged to execute the method.

Arranging sleeves around containers is a well known, low cost labelling method for providing a suitable label on a container. WO 2008/088210 A1 by the same applicant discloses prior art methods and devices. Tubular foil is used to form the envelope-like sleeves that can be arranged around a container as a label. In an embodiment a sleeve is heat-shrunk around the container for fixing the sleeve around the container.

Foil is supplied to a sleeving apparatus for sleeving the container from a reel. The tubular foil is provided as a flattened tube of plastic foil. The flattened tubular foil is supplied at high speeds. By connecting ends of tubular foil a continuous supply of foil can be achieved. Connecting devices are provided to switch from foil of an almost empty reel to foil supplied from a new, filled reel. The connection device allows connecting the end of the downstream (old) tubular foil with an end of the upstream (new) tubular foil from a new reel. Different connection methods are known, e.g. using a tape or making a sealed connection.

A prior art arrangement is known from EP 1 201 585 by the same applicant. A flattened tubular foil from a new reel/supply has a leading edge and corners are cut away. This allows opening of the thus formed two loose lips, separating the lips from each other. Another end of tubular foil can be positioned between the lips and can be fixed either by sealing or using tape. The lips can also be formed by cutting the leading edge on both longitudinal edges sidewardly.

In JP 62-043961 Y2 a tape splicer is disclosed showing an opened mouth of an end of tubular foil into which another end of tubular foil is positioned. Tape is sucked onto a tape surface and an end of foil adheres to the tape.

To execute and control the connecting of two ends of tubular foil many complex motions are to be executed requiring subsequent complex control and drives. Not only does this result in complex motions, but also costs of machines in general. Wear of the machines is high.

WO 91/11380 A1 discloses a splicer for film, such as photographic film provided with perforations. The splicer comprises a first (old) film roll and a second film roll providing film for further processing. The old film is maintained by suction on an input plate and process plate, the process plate being initially situated at an upper position. The new film is maintained by suction on an input plate and a trimmed end plate. Locator pins are inserted into the perforations of the film to keep it in a suitable position.

JPS 6097797 U discloses the use of adhesive tape for splicing two tubular foils and the use of vacuum holders to hold open the end of one to the foils.

A sub frame carries a tape dispenser for applying tape onto the film. The sub frame and the tape dispenser carrier by the sub frame can be moved between the upper position and a lower position. The film ends of the old film and new film are held on their respective plates. After a cutting process the sub frame is moved from the upper position to the lower position so that the cut-off end of the old film maintained on the process plate is aligned with the cut-off end of the new film maintained on the input plate. Next a piece of tape is applied to the abutting film ends in order to connect the films.

The known splicer has a number of disadvantages. For instance, it is difficult to accurately align the abutting ends of the old and new film each being held at a different plate and to accurately apply the tape at a suitable position on the films. Furthermore, the storage capacity for new film is limited to one roll of new film only.

It is therefore a goal of the invention, according to at least one aspect, to provide a method and device for connecting two ends of tubular foil by means of adhesive tape which improve prior art arrangements.

According to embodiments of the invention this goal may be achieved in a device and method as defined in the appended claims.

According to a specific aspect the invention provides a method and device for connecting ends of tubular foil that is less complex.

In accordance with an aspect of the invention at least one the goals is achieved with a method as claimed in claim 1. The method comprises the supply and provision of at least a first and a second end of tubular foil that is a flattened tubular foil. Tubular foil is circumferential in cross section and comprises in flattened form at least two layers positioned one above the other. A flattened tubular foil has at least two longitudinal edges formed along the supply direction.

Tape is supplied on a tape receiving surface of a tape applicator and the tape is held on said surface. The tape is adhesive. The tape can be one sided adhesive tape.

According to the method tape is applied to one of the ends of tubular foil, in particular to a flattened end of tubular foil, and thereafter two of the ends of tubular foil for connecting them. After connecting the ends of the tubular foil the tape is released.

The method comprises holding one end of tubular foil opened by tape applied to that end. Lips, formed by the two layers of foil, are partially disconnected in a previous step. The ends are disconnected either by removing the cut-away corner, as known from EP 1 201 585, or by cutting the longitudinal edges or by another method. According to the method tape is used as a tool for performing one step of the method, spreading apart/opening the lips, which will subsequently allow connecting the two ends of tubular foil. This reduces the complexity of the method. Holding the lips in the opened position, allows inserting the other end in between the opened lips.

Contrary to JP 62-43961 Y2 the tape is applied onto the foil end in the flattened state of the tubular foil and the foil end is subsequently opened.

In an embodiment applying the tape to the end of the foil to allow opening of that end comprises, at the same time, feeding that foil (end) in an upstream direction. This allows e.g. application by rotation or in other directions. Opening the foil end can at the same time comprise feeding the foil (end) in a downstream direction.

Tape is used to open the lips formed at the leading edge. By applying the tape on one of the lips, that lip is engaged. Only a portion of the tape needs to be applied. According to the invention applying the tape allows the opening of the leading edge. As the tape is applied using the tape applicator, said tape applicator is also used to open the first end.

The method comprises opening a first end of tubular foil. Accordingly the method comprises the actual spreading apart of the leading edges or lips of the flattened tubular foil. The opening of the foil allows inserting the other end of tubular foil.

According to an embodiment opening the first end of tubular foil comprises rotating the tape receiving surface. Tape is applied to the first end. By rotating the tape applicator and tape receiving surface holding the tape, the lip formed at the leading edge of the first end of tubular foil is correspondingly moved. Rotating the tape receiving surface allows a gradual opening of the lips.

According to an embodiment the tape is applied to the first end of tubular foil by rotating the tape receiving surface. Rotating the tape applicators allows precise control of the tape receiving surfaces. When e.g. tape is applied on opposite sides of a foil, contact between the two pieces of tape should be prevented.

In an embodiment the application of the tape by rotating can be followed by reversed movement of rotating allowing the opening of the tape. This rotating movement can be configured using a single axis of rotation and e.g. a single bearing, and can be driven by a single drive reducing the complexity of a method for connecting the ends. Rotation can be one of the two degrees of freedom for movement of the tape applicator.

In a further embodiment the applying of the tape also comprises moving the tape receiving surface towards the first end of the flattened tubular foil. This approaching movement of the tape receiving surface can be in a direction parallel to the foil trajectory allows positioning the tape applicator at a distance from the foil. The foil trajectory is the path of the foil through/into the device. The approaching movement allows approaching the foil for connecting the tape to the foil and allows pushing or forcing the tape onto the first end and/or the second end for connection.

In an embodiment the tape applicator having the tape receiving surface is allowed to move according to two degrees of freedom, rotational and an approaching direction which is a significant reduction of complexity for movement of the tape applicator with respect to prior art methods.

According to a further embodiment connecting the ends of tubular foil comprises rotating the tape receiving surface, preferably around the single axis of rotation. After applying the tape to the first end and opening the leading edges of the first end, the second end can be received between the opened leading edges and a connection can be made by applying the tape to the second end. This can comprise closing the leading edge lips of the first end by reversing the opening movement e.g. by counter-rotating the tape applicator. Again this results in a reduced complexity of the method for connecting the foil ends.

According to an embodiment connecting the ends of tubular foil can comprise feeding the first end in an upstream direction at the same time and can comprise, at the same time, feeding the second end in an upstream direction. This will allow to position the second end sufficiently deep (in an upstream direction) in between the opened lips of the first end.

The tape is held by the tape receiving surface during application of the tape and/or connecting of the tape to the first and second ends. According to a further embodiment the tape is partially released from the tape receiving surface during application of the tape or connection of the tape to the first and second ends. This preferably relates to the upstream part of the tape receiving surface. By releasing the tape from the tape receiving surface, the connection between the tape and the first end of tubular foil is maintained without introducing releasing stresses.

In a further embodiment the partially released tape is held again on the tape receiving surface of tape applicator after applying the tape to the first end. The tape is temporarily released from the tape receiving surface before connecting the ends with each other. By holding the tape again on the tape receiving surface, the tape and the foil can be forced in a path as directed by the tape applicator.

In an embodiment the foil ends are connected by two tapes on opposite sides of the flattened tubular foil, wherein applying the tape comprises moving tape receiving surfaces toward each other.

According to a further embodiment the method comprises aligning the tubular foil ends. Aligning can comprise sensor for measuring the position of the tubular foil, but can also comprise positioning the tubular foil in a specific position before connecting.

According to a further aspect of the invention a device as claimed in claim 8 is provided. The device has a supply for flattened tubular foils for supplying the first end of tubular foil in the processing unit for tubular foil defining a trajectory, processing and providing a second end of tubular foil. The processing units can comprise guides, but also a buffer device for storing temporarily an amount of foil. Foil from the buffer device can be supplied to downstream processing during interruption of supply from a reel having tubular foil. During the interruption the method for connecting is performed while foil is provided downstream processing from the buffer device.

The device for connecting the two ends comprises one or more adhesive tape applicators configured for applying tape to and connecting the ends of tubular foil, the tape applicator positioned downstream from the supply on the foil trajectory and the tape applicator having a tape receiving surface. The tape receiving surface is arranged to receive and hold adhesive tape. The adhesive tape can be supplied to the tape receiving surface from a tape dispenser. The tape can be one sided adhesive tape, wherein the non-adhesive side of the tape is supplied onto the tape receiving surface. The tape receiving surface has tape holders that can be switched on and off for holding the tape on the tape receiving surface.

The tape applicator is arranged to open the first end of tubular foil. Opening comprises bringing lips of the end of foil from a flattened state to an opened state. Accordingly the tape applicator combines the functions of holding the tape, applying the tape to the foil and connecting the end, with opening of the lips of the foil. The opening will allow receiving the other end of foil between the opened lips.

The tape applicator is arranged to open the first end of the tubular foil, after applying the tape to the first end and prior to connecting the ends. The opening of the first end is an intermediate function of the tape applicator. As the application of the tape and connection the ends comprises using the tape, accordingly the tape is used to hold open or open the first end of the tubular foil.

In an embodiment the device comprises a frame and the tape applicator is mounted rotatably with respect to the frame around a tape applicator axis extending generally perpendicular to a transport direction of the foil and generally parallel to the plane of the foil. Rotating of the tape applicator around the tape applicator axis rotates the tape receiving surface in upstream or downstream direction with respect to the flattened tubular foil. After applying tape to the foil rotating the tape applicator will result in upstream or downstream movement of the supplied flattened foil. Accordingly, the tape applicator combines a further function, i.e. as a device for moving the supplied first end in an upstream or downstream direction.

Preferably a drive is provided for driving the tape applicator around the tape applicator axis and is arranged to rotate the tape applicator in an upstream direction to apply tape to the flattened foil and in a downstream direction to open the end of the foil.

In yet a further embodiment the drive is arranged to rotate the tape applicator in an upstream direction to connect the ends of foil with the tape received on the tape receiving surface.

According to an embodiment, a device for connecting two ends of tubular foil by means of tape is provided. In an embodiment the device has a supply for tubular foil and a processing unit for tubular foil defining a foil trajectory. The supply can comprise one or more reels containing winded tubular foil. Once supplied, the tubular foil is guided into the device following a foil trajectory. The one or more processing units can provide guidance.

In an embodiment the device comprises a pin, notch or other kind of stop that can stop the motion, in particular the rotation, of the tape applicator when applying the tape to the first end of foil. The stop is arranged to prevent that tape from two tape applicators adhere together, which would disrupt operation of the device. The stop prevents rotation beyond a certain predetermined threshold. The stop can be drivable, allowing under certain conditions to not prevent rotation beyond the predetermined threshold. Details of an embodiment are provided in the figures.

The device for connecting two ends of the foil by an adhesive tape comprises one or more tape applicators configured for applying tape to and connecting the ends of tubular foil. In an embodiment the one or more tape applicators are positioned on opposite sides of the foil plane, downstream from the supply along the foil trajectory.

The tape receiving surface has one or more tape holders arranged to, when switched on, fix the position of the tape on the tape receiving surface. The tape receiving surface can be a rectangular surface. Tape holders can be embodied by openings/through holes in the tape receiving surface. A vacuum can be provided. When tape is positioned onto the surface applying a vacuum will result in fixing the position of the tape onto the tape receiving surface. The vacuum generator can be switched on and off by a suitable controller and is switched on when tape is supplied to the predetermined position and is switched off after the tape is connecting the ends of the tubular foil.

The device for connecting two ends of tubular foil by means of tape also comprises a tape dispenser for supplying tape to the tape surface. The tape dispenser comprises a supply of tape, e.g. a replaceable cartridge.

The device may be configured such that the foil may be conveyed from a first position downstream for further processing along a foil trajectory. When the foil supply is running empty, or the supply of foil is otherwise interrupted, e.g. by active cutting, the (old) foil will have an upstream end. The supplied foil will end and that end will at some moment reach the first position. The device according to the invention is arranged to connect the end of the foil with an end of a new or further foil. Further the device comprises a connection unit for connecting the ends of foil. The foil at the first position is in this application sometimes indicated as 'old' foil or second foil.

In an embodiment further foil is supplied from a further foil supply mounted on the frame and the device. The end of the further foil is provided at a second position different from the first position. When the old foil runs empty the end of the foil is to be connected with the end of the further foil. In an embodiment a carriage sub frame is mounted to the frame and is positioned near or at the first position. The carriage sub frame supports at least the foil end holding units arranged for holding an end of the foil supplied from the foil supply. The end of the foil can be held by the foil end holding unit. The frame can comprise a suitable guide for guiding the carriage sub frame from the first position towards the second position. A suitable drive can be used to drive the carriage sub frame between the positions.

In accordance to this embodiment, the foil end is brought to the second position from the first position as the carriage sub frame is mounted movably on the frame between the at least first position and towards the second position. Only when the foil ends are both at the second position, a connection unit can connect the ends of foil using tape.

In an embodiment the tape dispenser is mounted on the carriage sub frame and is arranged to dispense tape and wherein the device is arranged to apply tape to the end of the further foil at the second position. The dispensing is only started after moving the carriage sub frame towards the second position. In accordance with this embodiment a single tape dispenser mounted on the carriage sub frame can be used to dispense tape for applying to the further foils located at a different position and a first position.

In an embodiment the tape dispenser applies the tape to the end of the further foil. In another embodiment the tape is dispensed onto a tape receiving surface as an intermediate step before applying the tape to the end of the further foil. The tape receiving surface can be supported by the carriage sub frame or is fixed to the frame near the second position. In an embodiment wherein the tape receiving surface is supported by the carriage sub frame, the tape can be applied to the tape receiving surface before reaching the second position, but is applied to the further foil after reaching the second position.

In an embodiment the carriage sub frame movement is used for dispensing the tape along a trajectory, e.g. over the end of the foil or along the tape applicator. Accordingly, the guide and/or drive of the carriage sub frame is not only used for moving the carriage sub frame and elements supported by the carriage sub frame, but also for dispensing the tape along a certain trajectory. This double functioning reduces the complexity for e.g. a robot arm for moving the tape dispenser along the tape trajectory.

Clearly in accordance to any embodiment, the second position is a general indication of an area at which further foil will be supplied from the further foil supply. E.g. the second position is not limited to the exact position at which the foil ends are to be connected.

Although in an embodiment the connection unit can be mounted near the second position and fixed to the frame, in a preferred embodiment the connection unit is mounted on the carriage sub frame. This allows using the connection unit at multiple second positions and dispenses the need for multiple connection units each located at second positions.

In an embodiment one or more tape applicators are supported by the carriage sub frame, said tape applicators configured to apply tape to at least one of the ends of the foil, the tape applicator comprising at least the tape receiving surface. This will allow using the tape applicator at each second position, reducing the complexity of the device. When tape is to be applied to a further foil the carriage sub frame is transferred from the first position towards the second position, which will also bring the tape applicator supported by the carriage sub frame towards the second position allowing to receive tape and/or to apply tape.

In an embodiment wherein the tape applicator is supported by the carriage sub frame, the tape can be applied to the tape applicator before reaching the second position.

In accordance with a further embodiment, the tape splicer device of the invention is arranged to connect ends of tubular foil. Flattened tubular foil is supplied from the foil supply and further foil supply. In an embodiment the tape applicator is arranged to open the end of the flattened tubular foil supplied from the further supply at the second position. Further the tape applicator is arranged to open the end of the tubular further foil only after applying tape to that end. Accordingly the leading edge or mouth of the end of the further foil is opened using the tape, in particular using the tape dispensed from the tape dispenser supported by the carriage sub frame. The tape is applied onto an external side of the two layered tubular flattened foil, allowing engaging the flattened tubular foil from the external side and spreading apart the foil ends.

In a further embodiment the tape applicator is mounted rotatably around the tape applicator axis extending generally perpendicular to the transport direction of the foil. This allows the tape applicator to be moved in a first direction wherein a part of the tape applicator facing the foil is moving downstream along with the foil, and in another direction wherein that same face is moving upstream direction with respect to the foil.

In an embodiment the tape splicer device comprises a drive arranged for driving the tape applicator around the tape applicator axis. This allows controlling rotation of the tape applicator in an upstream and downstream direction. In an embodiment the tape applicator is driven in an upstream direction for applying the tape to the foil end. In a further embodiment the tape applicator is driven in a downstream direction for opening the leading end of the flattened tubular foil. In a preferred embodiment the drive rotates the tape applicator in an upstream direction to connect the ends of the foil by the tape received on the tape receiving surface. Accordingly the rotational freedom of the tape applicator can be used for several functions including applying the tape to the end of the foil, opening of the flattened tubular foil end and/or for connecting the ends of foil. Such an arrangement is less complex than prior art devices.

In a further embodiment at least two tape applicators are mounted on opposite sides of the foil trajectory and the tape applicators have generally parallel extending tape receiving surfaces. These tape applicators allow applying the tape to opposite sides of the foil, in a preferred embodiment a flattened tubular foil.

In an embodiment the tape applicators are arranged such that the tape applicators can move towards each other by closing the supplied foil between the tape applicators. This allows conveying the foil between the opposite tape applicators when the applicators are moved away from each other, and moving the tape applicators towards each other when tape is to be applied and the ends are to be connected.

In an embodiment multiple foil supplies are arranged on the tape splicer device. The foil supply can comprise a reel rack for mounting reels supporting winded foil or flattened tubular foil. The reel racks can be mounted adjacently forming multiple adjacent foil supplies. The adjacent foil supplies result in first and second positions that are adjacent one another.

In an embodiment an end of the foil supplied at the first position, is guided from the first position towards the second position, and these foil ends are connected. Tape is used for making the connection. During the transfer the foil remains connected with further downstream parts of the foil in order to form a continuous foil.

In accordance to an embodiment of the method tape is supplied to the end of the further foil only after guiding the end of the foil from the first position towards the second position. This allows dispensing tape when the tape ends are in vicinity of each other. In an embodiment the invention allows applying the tape and connect the ends in one go/operation.

After connecting the method can be repeated: the further foil supply runs empty and an upstream end of foil is provided at the second position. At the first position a downstream end of a foil is provided. The upstream end is guided from the second position towards the first position and the ends are connected using tape.

In an embodiment the end of the foil is held by a carriage sub frame at the first position. Guiding the end of the foil from the first position to the second position comprises transferring the carriage sub frame from the first position towards the second position. Tape is dispensed from the carriage sub frame. The tape dispenser is e.g. supported by the carriage sub frame and is brought at the second position only after guiding the carriage sub frame from the first towards the second position.

In an embodiment applying the tape to the end of the further foil comprises applying the tape from a tape dispenser to a tape receiving surface supported by the carriage sub frame, holding the tape on the tape receiving surface, applying the tape held on the tape receiving surface onto the end of the further foil and releasing the tape. The tape applicator is an intermediate tape holder, which allows handling of the tape already dispensed. Handling of the tape after dispensing and cut loose from the tape dispenser is easier and allows more complex handling. Holding the tape onto the tape receiving surface can comprise a vacuum technique.

In an embodiment the tape receiving surface rotates to apply the tape to the end of the foil. In an embodiment the tape is applied to the further foil by rotating. And in a further embodiment the ends of foil are connected using tape that is applied by rotation of the tape applicator.

In an embodiment tape splicing tubular flattened foil is provided. The method can comprise opening the end of the flattened tubular further foil by applying tape to the end of flattened tubular further foil and subsequently holding the end of tubular foil in an opened position by the tape applied to that end. By using the adhesive properties of the tape reversing the applying movement of a tape applicator can be used to open and hold open the mouth of the end of the further foil.

In an embodiment the ends of foil are connected by two tapes on opposite sides of the foil, preferably tubular foil. This strengthens the connection.

In an embodiment the method comprises dispensing tape from a tape dispenser to be applied on one side of the foil, guiding the tape dispenser to a further position and sequentially dispensing tape from the tape dispenser to be applied to another side of the foil. A single tape dispenser is used to dispense the tape for both sides of the foil, resulting in a cost reduction.

In an embodiment the method comprises cutting the foil supplied from the reel and forming an end of the foil at a first position. By cutting a predetermined cut is made at a predetermined position, allowing more control during connection of the ends.

In an embodiment the method further comprises detecting whether the reel is becoming empty. Determining can comprises timing, counting the number of sleeves on the foil, image analysis of the reel etc.. Before running completely empty a sequence can be initiated. The cutting of the foil can be initiated after detecting a certain threshold. Thereafter the carriage sub frame is transferred from the first position towards the second position.

In an embodiment the method comprises aligning the tubular foil ends. Aligning can comprise moving the foil in a direction perpendicular to the conveying direction. Aligning can comprise moving the foil at the first position. Further aligning can comprise detecting the foil ends and adapting the position of the carriage sub frame in order to align the ends of foil at the second position.

In an embodiment the device also comprises a cutting unit for cutting the supplied tubular foil. This allows cutting of the foil at an exact location. This in turn provides extra control over the position for connecting the thus formed end of the foil.

According to a further aspect a controller is provided to allow execution of the method. The controller is arranged to control the drive for rotating one or two tape applicator. The controller allows control of the supply of tape.

Various embodiments are possible within the scope of the invention. The scope of protection is by no means limited by the illustrated embodiments. Although the invention will now be described with reference to the drawing and the claims, other (partial) aspects of the embodiments illustrated explicitly or implicitly disclosed herein, could be the subject of divisional patent applications.

Although not shown in the figures, it will be clear to the skilled person that any or each of the mechanical components can be connected to a suitable drive, in some embodiments, servo motors, that in turn can be connected to a controller for executing the method. In the figures, some of these drives, power connections, as well as connections to a controller are not shown in detail. These connections can be wired or wireless. The controller can be a computer implemented controller having an interface, and preferably having a user interface comprising a screen, input means and network connection providing a suitable bus control.

The invention will now be described with reference to the drawing showing embodiments of the method and device as well as the controller according to the invention, in which:
Figure 1a shows an overview of an embodiment of the splicer according to the invention,
Figure 1b shows a schematic overview of a system for sleeving containers using tubular foil,
Figure 2 shows a perspective view of a carriage sub frame of a splicer device seen in the direction according to arrow II,
Figure 3 shows a perspective view of a carriage sub frame of a splicer device according to arrow III in figure 1,
Figures 4a-4g show steps of tape dispensing on the tape applicator of a splicer device according to an embodiment of the invention,
Figure 5 shows a top view of the tape dispenser and tape applicator according to an embodiment of the invention,
Figure 6 shows a detail according to VI in figure 5,
Figure 7 shows a detail of the most relevant tape applicator parts of the carriage sub frame of a splicer device, and
Figures 8a-8h show consecutive steps for applying a tape to foil and connecting the foil ends.

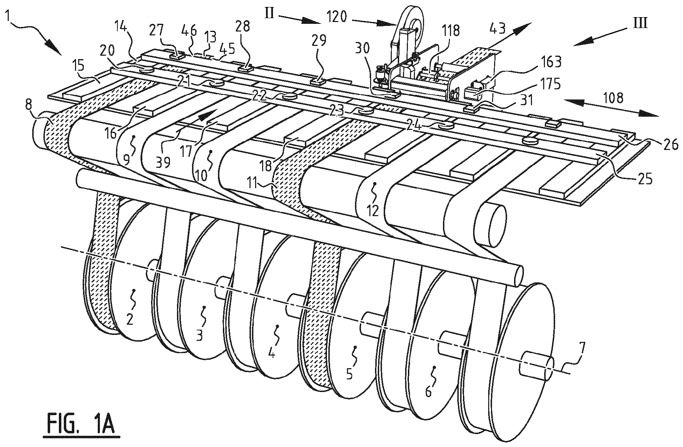

Figure 1a shows a splicing device 1. A splicing device 1, in a preferred embodiment a tape splicing device, allows providing a continuous feed of foil to downstream applications of foil. In the drawing the splicer device 1 comprises a device for tape dispensing 120, a device 103,104 for applying and connecting tape to a foil and a device to connect ends of tubular foil. The splicer device is arranged to execute methods to dispense tape, to connect foil using tape, and to connect ends of foil.

In the illustrated embodiment tubular foil of flattened form is used. Several foil supplies are provided and the splicer 1 allows connecting an end of an old foil with a beginning of a new foil. Several connection methods are available, including sealing. In the preferred embodiment a tape is used for connecting the tubular ends. Although the method will illustrate connecting tubular foil with two pieces of tape, clearly the invention also comprises using a single piece of tape or applying tape to non-tubular foil.

Several reels 2-6 are mounted to the frame of the splicing device 1 allowing rotation around an axis 7. Each reel is mountable on a separate axle sharing the axis 7. The reels 2-6 comprise wounded tubular foil in a flattened state. The foil can be imprinted. A full reel is put into the splicing device. An empty reel 2-6 can be replaced by a new reel. The splicer 1 can have more reel positions than illustrated, such as seven, or less reel positions.

Foils 8-12 are supplied from the respective reels. The reels form the supply for flat tubular foil for further downstream processing. In other embodiments a single layered foil is supplied.

A leading end 13 of one of the foils is positioned on a guidance and cutting table 14. The guidance and cutting table 14 allows an operator to position a foil end in a predetermined position so as to allow further processing. The table 14 allows guidance of the foils 8-10 along guiding blocks 15-17. The guiding blocks 15-18 can be aligned with the reels. In an embodiment the guidance and cutting table 14 comprises drives to position the (end of a) foil in a predetermined position.

The guidance and cutting table 14 also comprises individually controllable foil stops 20-24 part of a first bridge 25 that covers the foils 8-12 when they are fed over the table 14 surface. The individually controllable foil stops 20-24 allow holding the foils 8-12 in their current position. In the shown embodiment at least foils 8-10 are locked in position.

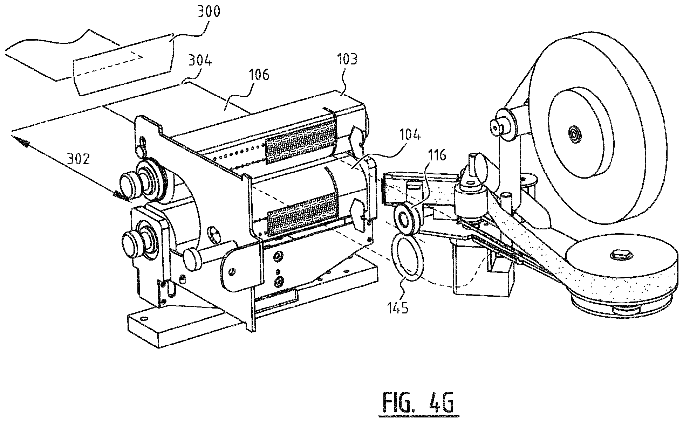

A further bridge 26 also covers the foil trajectory of the respective foils 8-12. Bridge 26 comprises individually controllable, schematically illustrated, cutting devices 27-31 that allow cutting the foil in a direction generally perpendicular to the foil feeding direction 39. An example of an actual knife part 300 of a cutting device 27-31 is shown in Figure 4g. The table 14 can have slits positioned under bridge 26 that allow cutting the foil using knives. In an embodiment a cutting device is mounted movably in direction 108 underneath the table 14. A single cutting device is then able to cut the supplied foil.

In the shown embodiment foil 11 is currently being supplied from the reel 5 over the table 14, under the bridges 25,26 to a carriage sub frame 101. When the reel 5 runs empty, an end of the foil will be formed. The splicer 1 will connect the formed end with an end of a further foil supplied from one of the other reels 2-4,6.

Foils 8-10,12 supplied from reels 2-4,6 form further foils. The further foils each have an end, in this embodiment positioned by the operator, extending somewhat from guidance and cutting table 14.

In Figure 1a foil 11 is supplied in the foil feeding direction 39. The foil alignment unit 105 is cooperating with the guiding block 18 to feed the foil in a preferred position, specifically the alignment in the direction 110.

When foil 11 is supplied, the carriage sub frame 101 allows passage of the foil 11 for further downstream handling/processing 43. Elements on the carriage sub frame 101 surround the foil trajectory.

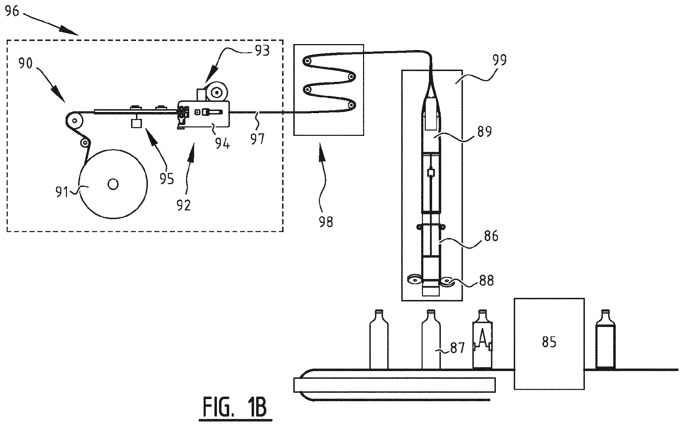

Figure 1b shows a schematic overview of a device for sleeving containers. Clearly many other applications could benefit from the devices and methods according to this disclosure and the inventions are in no way limited to the illustrated sleeving device/method.

A schematically illustrated supply 90 having a reel 91 supplies tubular foil in flattened state to a device 92 for applying to and connecting foil by tape having a tape dispenser 93. Only carriage sub frame 94 is illustrated. A schematically illustrated cutting device 95 can cut the foil and carriage sub frame 94 can move in order to allow connecting the old cut foil with a new foil from a new supply. From the splicer 96 foil 97 is fed to a buffer device 98. The buffer device 98 can contain a supply of foil. Foil is fed from the tape splicer 96 and is continuously fed further downstream. When foil supply from the splicer 96 is interrupted, e.g. when a reel runs empty, foil is fed to further downstream application from the buffer supply held in the buffer device.

Downstream from the buffer device 98 a sleeving device 99 can comprise a mandrel 89 that opens the tubular foil, cuts sleeves 86 and shoots 88 the individual sleeves over containers 87 such as bottles. Further downstream the bottles are led through an oven 85 that will heat shrink the sleeve onto the container.

In accordance to the invention any of the units downstream from the supply of foil is a processing unit. The unit connecting the ends of foil are a specific example. Although in the shown embodiment the connection unit is supported by the carriage 101, the connection unit can be mounted on other frame parts.

Now the carriage sub frame 101, in the shown embodiment carrying the device for applying and connecting tape to a foil will be discussed in more detail.

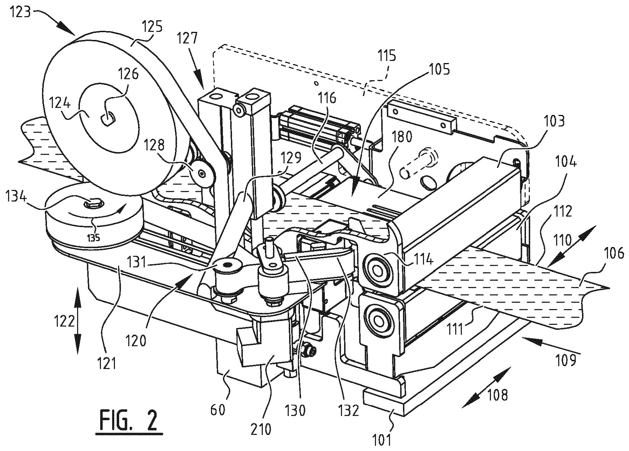

The carriage sub frame 101, shown in more detail in Figure 2, supports a tape dispenser 120, tape applicators 103 and 104, foil alignment unit 105 and several foil 106 guiding element. Further a suitable drive is pulling the foil.

Carriage sub frame 101 is arranged in the splicer device 1 such that it can be moved according to arrow 108 with respect to the frame of the splicer device 1. A suitable drive is arranged to initiate and stop movement of the carriage sub frame in direction 108. Servo drives or other electrical drives can be used for moving the carriage sub frame 101. Suitable sensors can be arranged on either the frame of the splicer device 1 or on sub frame 101 for determining and measuring the position of the carriage sub frame 101 with respect to the splicer device/frame.

When it is determined that reel 5 is running empty, a splicing method, in a preferred embodiment a tape splicing method, is initiated. The foil 11 is stopped and held by stop 23. The foil 11 is cut using a knife in cutting device 30 allowing cutting the foil at a predetermined position. This will form the end edge of an 'old' or first foil. The operator has prepared 'new' or second foil ends, such as leading end 13.

In the shown embodiment the leading end 13 is provided with an obliquely cut-away corner at both longitudinal edges, such as known from EP 1 201 585 A1 from the same applicant. In an embodiment a single layered foil is supplied having no preprocessed leading end.

The tubular foil 8 comprises at least two layers of foil connected near the edges. By cutting that edge, and in an embodiment by removing a part of the foil, the leading end 13 now comprises two layers that can be separated somewhat from each other. The cut-aways form loose lips that can be separated from each other, i.e. the mouth of the leading end 13 can be opened. In another embodiment the lips are separated by cutting the side edge without removing material.

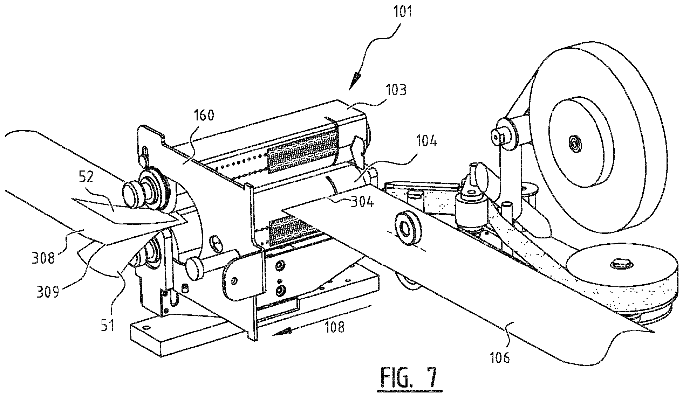

After cutting the foil 11 and transporting the formed end 304 downstream such that it is positioned inside the carriage sub frame, see e.g. figure 7, carriage sub frame 101 can e.g. move from that first position towards a second position close to leading end 13. On both transverse sides the carriage sub frame 101 has guiding wings 51,52 that allow receiving the leading end 13 in between the wings 51,52 and as a result in between tape applicators 103,104 as will be described in more detail. In further subsequent steps, because of the predetermined position of leading end 13, a splicing method connecting the ends of foil, can be executed.

In any embodiment of the invention a first position of a foil end is a position of a foil end formed when the supply (reel) runs (close to) empty. A second position is a position close to an end of a further foil to which the formed end is to be connected. In the shown embodiments the difference between a first and second position is in a direction 108 and can be overcome by transferring the carriage sub frame 101 in the direction 108.

In any embodiment a foil end holding unit can any of the processing units positioned along the foil trajectory that offers some control over the position of the end of the foil. The formed end of the foil is received in the carriage sub frame as a result of conveying the foil further downstream. The foil end holding unit doesn't have to actually engage the foil end.

The operator can replace the empty reel 5 by a new reel and position the new foil on the table 14 in the predetermined position.

Returning to figure 2, foil 106 is supplied in direction 109 from a reel with winded tubular foil. The tubular foil 106 will pass tape applicators 103, 104 positioned on opposite sides of the foil trajectory.

The position of the foil in the transverse direction 110 of the foil supply is guided and adjusted using the foil aligning unit 105. Suitable sensors determine and measure the position of the foil 106 and in particular sides 111 and 112 of foil 106 and, if needed, foil aligning unit 105 will engage foil 106 to correct the position of the foil in the transverse direction 110 back to a default position. The default position of the foil 106 is the position of the foil in which foil connection can be made. A position sensor can e.g. detect the side position of the foil 106.

Registration sensor 204 is arranged to monitor the foil and in particular the prints on the foil. Connecting the old foil and new foil is to be arranged such the repetitive print remains at the same pitch. Therefore the pitch is determined at the sensor 204 allows cutting at a predetermined position, e.g. exactly in between the prints.

Foil alignment unit 105 is connected to drive 60, in an embodiment a servo motor, that will move the alignment frame 180, e.g. by tilting, in the direction in order to align edges of the foil in the default position with regard to the transverse direction 110.

In order to allow an overview of the device, many of the frame parts are shown either only partially, such as frame part 114 or are shown with dotted lines 115, such as frame part 115.

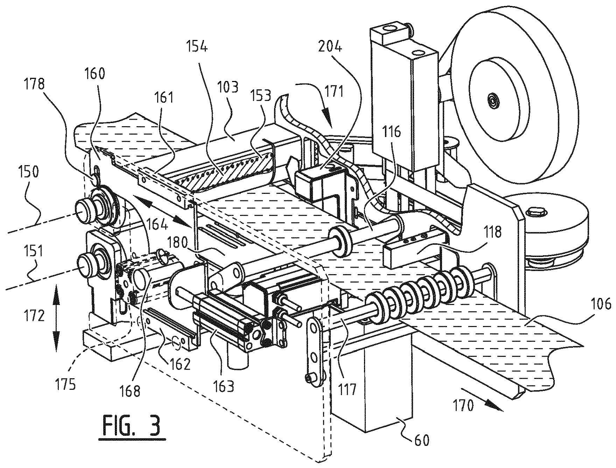

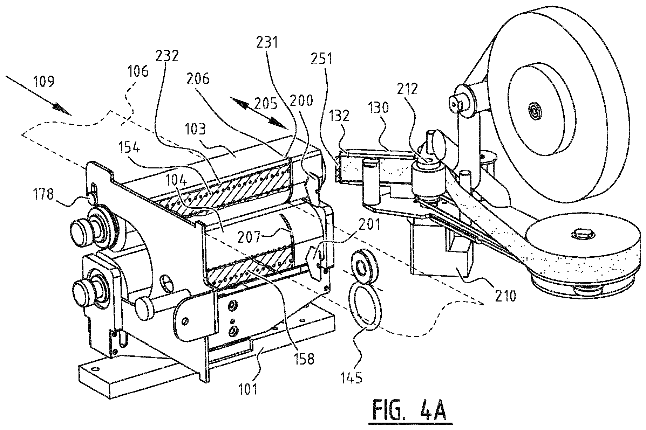

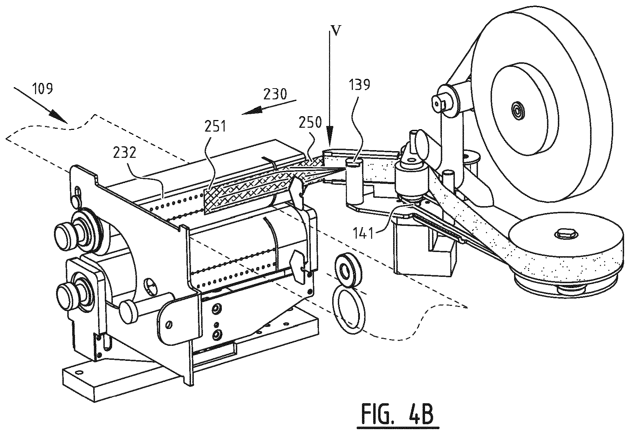

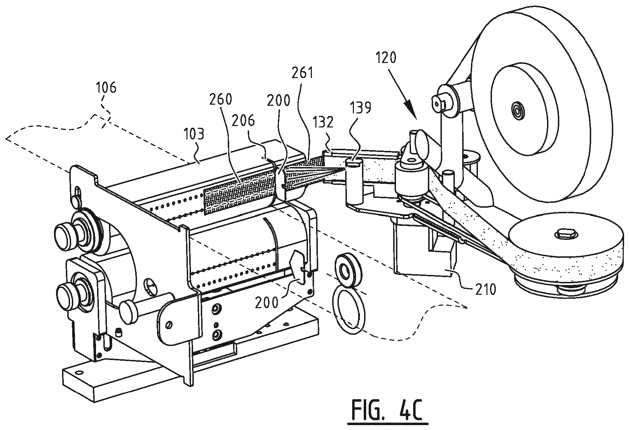

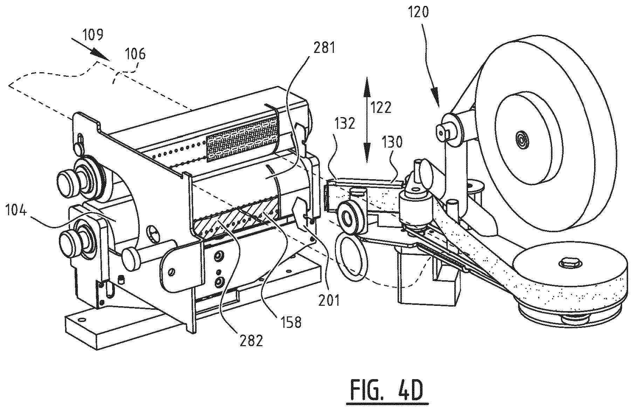

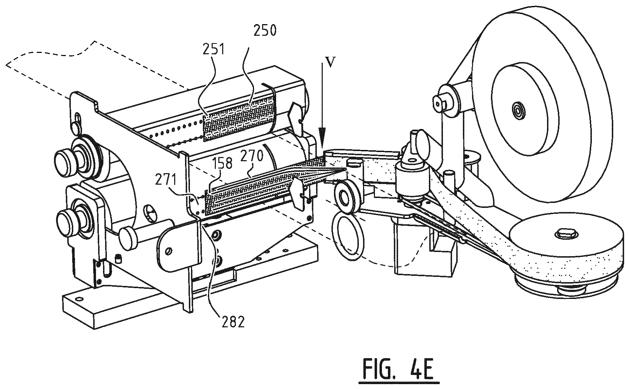

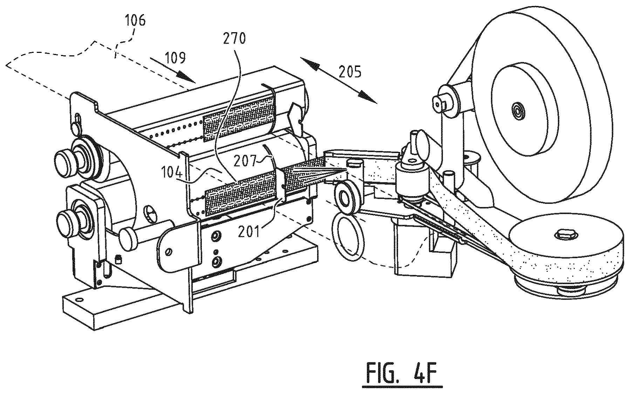

A downwardly biased arm 116 will force the foil 106 in a downward direction onto a wheel 145, see figures 3 and 4. Wheel 145 has a fixed position with bearing with respect to the foil alignment frame 180. It can be driven. In an embodiment the wheel 145 and arm 116 cooperate to e.g. brake the movement of the foil 106, e.g. when the supply of foil is running empty.

A further downstream rigid arm 117 comprising bearings with rollers prevents upward movement of the foil. After arm 117, foil 106 can bend upwards (not shown).

When foil 11 is supplied from the reel 5 the alignment unit and foil feed are continuously aligning/driving the foil.

The tape dispenser is generally indicated with reference numeral 120 and is positioned sideways from the foil 106 along a side of the carriage sub frame 101. The tape dispenser 120 is positioned on a further sub frame 121 that can be moved with respect to carriage sub frame 101 according to arrow 121 in an upward and downward direction using suitable drive.

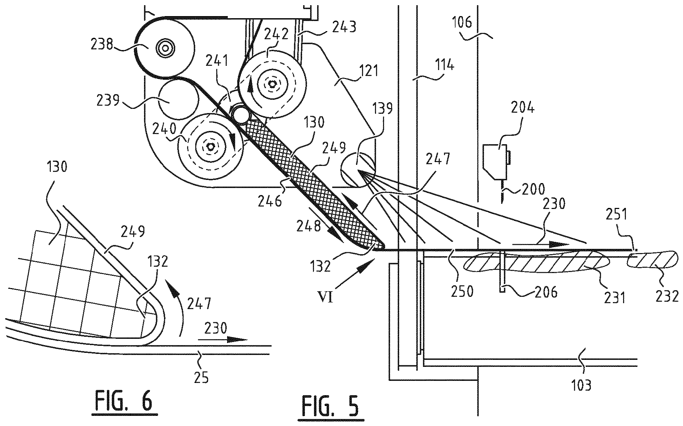

Tape dispenser 120 comprises a tape supply 123. In this embodiment the tape supply 123 comprises tape 125 with protection sheet winded around a reel 124 that can rotate around an axis 126. Tape is supplied in direction 127 and guided by wheels 128 and an angled guide 129 that guides the tape into a generally upright position around wheel 131 with a generally upright axis and towards tooth 130. A detailed view of the tooth 130 is shown in figures 5 and 6 and will be discussed in more detail hereunder.

In the embodiments shown, the tape dispenser sub frame 121 supports not only the tape dispenser 120 but also the tape supply and tape cover sheet discharge, but these are preferred embodiments.

The protective sheet is guided over the tape dispensing end 132 of the tooth 130 back towards a collecting reel 134 having an upright axis that collects protective sheeting by winding in direction 135. In this embodiment reel 134 is driven in direction 135 in order to collect protective sheeting.

Tape applicator 103 is rotatably mounted on carriage sub frame 101. Tape applicator 103 has a rotation axis 150 and tape applicator 104 has a rotation axis 151. Tape applicator 103 comprises a partially rounded generally rectangular tube having holes 153 on tape receiving surface 154 that is shown shaded in figure 3. The tape applicator 103 is connected to a vacuum source (not shown) that can apply a vacuum that will invoke a sucking force using openings 153 that will suck a tape onto the tape receiving surface 154.

The tape applicator 103 can be driven around tape rotation axis 150 by a suitable drive 163. The same or a further drive, or using a transmission, can drive tape applicator 104 around rotation axis 151. Suitable servo motors can be applied and the rotation of tape applicators 103 and 104 can be synchronous.

Figure 4a shows the tape dispenser driving unit 210 connected to roll 212 that can pull the tape protective layer over the tape dispensing end 132 of tooth 130.

Although according to the illustrated embodiment tape applicator 103 will receive a piece of tape, other embodiments are possible. Tape applicator 103 can also comprise a tape dispenser or an adhesive supply or sealing device is provided on the tape applicator 103. The executed methods using the tape applicator 103 (or tape applicator 104) is in no way limited to using a tape.

Tape applicator 104 can move in the direction according to arrow 172 using a suitable drive such as a servo motor. This allows moving the tape applicators towards each other, in this case moving only a single tape applicator 104, to enclose on the foil in between the tape applicator. This will allow applying and connecting tape onto both opposite sides of the flattened tubular tape foil ends.

Now first a method and device will be described for dispensing tape. Clearly other means for making to the connection between a first foil end and a second foil end could be applied in combination with other elements or methods according to this description.

Figure 4a shows an initial position while foil 106 is being supplied in the downstream direction 109 from the flattened tubular foil supply. Suitable sensors are arranged to determine and measure whether the supply from the reel is running out. At a predetermined moment or after measuring a predetermined signal, the tape dispensing will be initiated followed by the tape applying and tape connecting. In figure 4a a splicer state is shown wherein the tape dispenser is ready for tape dispensing.

In the initial tape dispenser state as indicated in figure 4a, the tape dispenser end 132 is located generally in the same horizontal plane as the top tape applicator 103 and the tape receiving surface 153. As a result of this positioning, a part 231 from the tape receiving surface part 153 is located close to the tape dispensing end 132 and a part 232 is located more remote. The more remote part 232 is positioned at a larger distance from the tape dispensing end 132 than the part 231.

Figure 4b shows the initiated tape dispensing. From the tape dispensing end 132 tape 250 is dispensed in direction 230 and moved away from the tape dispensing end 132. The tape leading end 251 will reach the tape applicator 103, first at part 231 and, when the dispensing is continued, move in the direction of the remote part 232.

As shown in more detail in figures 5 and 6, during dispensing the actual tape and protective sheet 246 is moved along 248 over tooth 130 in the direction of end 132 and the tape protective sheet 249 is pulled off from the actual tape 250 near the tape dispensing end 132 and continues in direction 247, while actual tape 250 is dispensed in direction 230.

Figure 5 shows a detail of figure 4b and 4e according to arrow V in figure 4b providing a top view. Tape and protective sheeting 246 is provided from a supply and guided between rollers 240, 241 rotating around upright axes.

Roller 242 is connected by a belt 243 to reel 134. Rollers 240,241 and 242 are in frictional direct contact with each other. Tape + protective sheeting and tape sheeting is guided between the respective rollers 240,241,242. One of these rollers 240 can be connected to a suitable drive unit 210. The combined construction of transmissions (frictional/belt) allows drive 210 to drive rollers 240-242 and reel 134. Further rollers 238,239 guide the tape 246.

During the dispensing action as shown in figure 4b, a nozzle 139, positioned on the tape dispenser sub frame 121 is switched on and directs gas, such as air, towards the tape 250 being dispensed, pushing the tape 250 onto the tape receiving surface 154 of tape applicator 103. As the nozzle 139 is directed along the tape dispensing direction 230, a somewhat laminar flow of gas will provide a "pushing" force pushing the tape 250 onto the tape receiving surface 154.

A suitable tape 250 is used. Preferably the tape has at least a predetermined amount of rigidity, allowing a horizontal dispensing of the tape while maintaining a generally horizontal direction of the tape without supporting the dispensed end against rotational forces. Preferably the tape stiffness is at least enough to dispense tape in the horizontal direction over at least 5 cm, preferably 8 cm, more preferably 10 cm. A suitable tape is aluminum tape.

In an embodiment an additional force can be provided for maintaining a generally horizontal extension of the tape 250 while being injected from the tape dispenser by providing a (limited) vacuum inside the tape applicator 103. This results in a sucking force of the tape 250 onto the tape receiving surface 154 through the holes 153/154.

While the tape 250 is being dispensed, the tape leading end 251 is moved in the tape dispensing direction 230 passing the proximal part 231 and eventually reaching the remote part 232 of the tape receiving surface 154. The tape end 251 reaches the tape receiving surface accordingly without any other mechanical driving other than the actual tape dispensing, e.g. by pulling the protective layer using the dispensing driving unit 210 and roller 212. This reduces the mechanical complexity of tape dispensing.

During the tape dispensing foil can still be fed in the feeding direction 109 from the (still not empty) reel.

In this application a (finite) remote part 232 of the tape receiving surface is any part of the tape receiving surface that is located more remote than a (finite) proximal part 231 of the tape receiving surface. The remote part does not have to be the most remote part of the tape receiving surface.

In the embodiments according to figure 4b and 4c, the remote part 232 is a part halfway the tape applicator 103 seen in the direction 230 from the tape dispenser. In this embodiment figure 4b shows the end position of the tape end 251 when tape dispensing is completed in direction 230. In other embodiments the tape end 251 is moved more remote in tape dispensing direction 230, while, also falling within the scope of the invention, tape dispensing could also have ended more prematurely, bringing the tape end 251 only at one-third or even one-fourth or one-fifth of the total tape receiving surface.

When tape dispensing in the tape dispensing direction 230 has ended, the dispensed tape 250 is locked into position onto the tape receiving surface 154 by applying a vacuum in the tape applicator 103 sucking the tape onto the tape receiving surface 154 through the holes 153. Until or even after locking the tape into position onto the tape receiving surface by the vacuum, the gas nozzle 139 can provide its supporting pushing force.

Figures 4a and 4c show tape cutting knives 200 and 201. Tape cutting knife 200 is received in a (not shown) cutting device comprising a house and e.g. an air cylinder that allows displacing the knife 200. The cutting knives can move in direction 205 into a cutting slit 206 provided in tape applicator 103 and cutting slit 207 in tape applicator 104 respectively. This will allow cutting the tape that is provided on the tape receiving surface.

After the tape reaching the end position on the tape receiving surface 154, the tape dispensing in direction 230 is stopped.

When the tape has reached the end position, and preferably after locking the tape into position, the dispensed tape 250 is cut using the schematically illustrated cutting device by driving the knife 200 into the slit 206. This action will separate a part of the dispensed tape 260 from the tape 261 still connected to the tape dispenser. The separated tape part is held onto the tape receiving surface 154 by applying the vacuum.

In an embodiment the tape part extending beyond the tape dispensing end 132 can be retracted e.g. by driving the tape dispenser drive in an opposite direction. In other embodiments part is not retracted or is cut off by an auxiliary cutting device. In the following figures however, the tape extending beyond the tape dispensing end is removed.

Figure 4d shows the tape dispenser 120 in a second position wherein the tape dispenser sub frame 121 is moved in a generally vertical direction 122 with respect to the tape applicator 103, 104 such that the tape dispenser end 132 is now generally in the same plane as the tape applicator 104 and the tape receiving surface 158. The position of the tape dispenser 120 is generally similar to the initial state although the tape dispenser 120 is now in line with the tape applicator 104.

Although the tape dispenser sub frame 121 is guided in the direction 122 generally perpendicular to the foil trajectory, also other guide directions are possible, e.g. v-shaped.

Generally the same sequence of tape dispensing is executed again, now dispensing tape onto the tape applicator 104. Accordingly, a single tape dispenser is used for applying tape to the tape applicators 103, 104 positioned on opposite sides of the foil moving between the two tape applicators. This results in a substantial saving for cost, while a single guide and drive is needed only. The tape dispenser drive and guide for arranging and controlling the movement in direction 122 of the tape dispenser sub frame 121 with respect to the tape applicators 103,104 and tape receiving surfaces is not shown in figures 4a-4g.

Generally the tape dispenser end 132 moves from a first position in which the tape dispenser end is directed at the tape applicator 103 and the tape receiving surface 154 to a second position directed at the other tape applicator 104 and other tape receiving surface 158.

In an embodiment the foil 106 is still being dispensed from the reel in the foil transport direction 109, as shown in figure 4d, when the tape dispenser moves downward to the other tape receiving surface.

In figure 4e tape dispensing a second piece of tape 270 with a second tape leading end 271 onto the second tape applicator 104 having a second tape receiving surface 158 is illustrated. The tape is fed from the tape dispensing end 132 and extends there from. The second tape leading end 271 first reaches a proximal part 281 of the second tape receiving surface 158 and is dispensed further so as to reach a less proximal, that is more remote part 282 of the second tape receiving surface 158.

Tape dispensing is in the shown embodiments generally in a horizontal direction wherein the tape extending from the tape dispensing end 132 is unsupported against gravity other than by its internal stiffness and a connection that is maintained with the supply of tape. Some support is offered by a pushing force exerted by a gas flow provided from the nozzle 139.

When tape is dispensed e.g. in a downward vertical direction, in another embodiment, the gas nozzle can prevent curling of the tape back to a winded state.

The tape dispensing is ended when the second tape end 271 reaches a predetermined remote part 282 of the tape receiving surface 158 while further a surface area of tape 270 covers more proximal parts of the tape receiving surface 158. The second tape is then locked into position by providing a vacuum resulting in a sucking force of the tape 270 onto the tape receiving surface 158. Generally, a length of tape is dispensed generally similar to the first tape, still being held on tape receiving surface of tape applicator 103.

Thereafter the dispensed tape 270 is cut using cutting device having a knife 201 that is moved in direction 205 into a slit 207 provided in tape applicator 104 as shown in figure 4a. This can be followed by possible retraction of the tape end still extending beyond the tape dispensing end 132.

During the second tape dispensing steps, foil can still be provided from the reel in direction 109. In this embodiment providing the second tape onto the tape applicators and the tape dispensing sequence and can start before the actual tape connection sequence. Preferably the tape dispensing sequence is started a predetermined time before the reel from the foil is empty. Foil can still be continuously supplied during the tape dispensing sequence.

As a last step of the tape dispensing sequence the tape dispenser can be moved back to its initial position, or a following tape dispensing sequence can start with the tape dispensing sub frame located adjacent the second tape applicator 104.

In figure 4g a cutting device 30 (as shown in figure 1a) having a knife 300 positioned upstream from the tape applicators 103,104 along the foil trajectory, cut the foil 106, at a predetermined distance 302 upstream from the tape applicators. The result is that a predetermined length 302 of foil is available, and a suitable controller can drive the foil in foil transport direction 109 e.g. using the wheel 145 and counter wheel 116 to pull the foil and foil edge 304 in foil transport direction 109. Because the length of the foil is known, exact positioning of the foil edge 304 is possible.

The cutting device 30 can be part of the table 14 as illustrated in figure 1.

Figure 7 illustrates the (partially shown) carriage sub frame 101 moving in a transverse direction 108 with respect to the guidance and cutting table 14 driven by a suitable driver. The foil end 304 of the old foil is conveyed somewhat downstream and held in a predetermined position with respect to the carriage sub frame 101 and tape applicators 103,104. The splicer device 1 allows transverse movement 108 of the carriage sub frame 101 holding the foil end 304 while maintaining the foil connection with further downstream processing units such as a buffer device.

The carriage sub frame is, when 'old' foil is supplied positioned at the first position. The end of the next or further foil is positioned at the second position and the carriage sub frame can be moved, guided or transferred from the first position towards and to the second position.

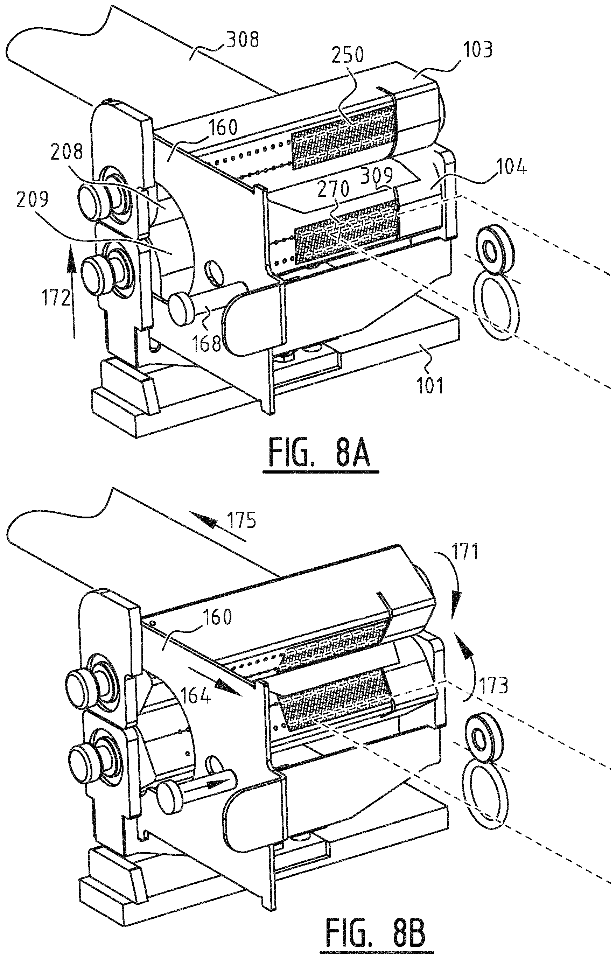

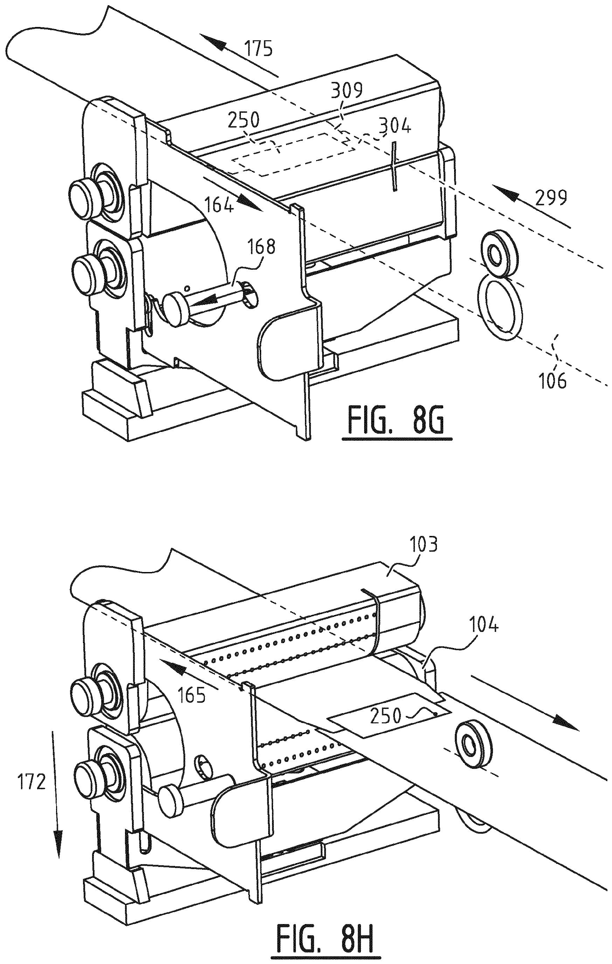

A foil 308 is supported by the guidance and cutting table 14 in a predetermined position. The foil end 309 has partially removed edges which will allow opening the layers of the tubular foil 308 near end 309. In the predetermined position end 309 will run in between wings 51,52 on carriage sub frame 101 which will bring the end 309 between tape applicators 103,104. Again as a result of the predetermined position of end 309, carriage sub frame 101 is moved over a certain distance allowing the end 309 to be aligned with end 304. The edges of both foils 308 and foil 106 can be aligned. In an embodiment further sensors allow the alignment. The aligned position is shown in Figure 8a as the initial position of the method for applying and connecting the ends of tubular foil in a splicing device 1 using tape.

Aligning end 304 of the 'old' foil 106 with pieces of tape 154,158 and especially with foil end 309 of a 'new' foil 308 can comprise an engaging device (not shown) arranged to engage foil 106 close to end 304, said engaging device connected to sensors for sensing a (relative) position of end 309 and the engaging device arranged to move at least sideward 110 so as to align the longitudinal edges of the respective foils 106 and 308. In an embodiment the tape receiving surfaces are mounted in the splicer 1 movable in direction 110 so as to allow alignment of the foil ends after applying tape.

Further such an engaging device can fix the relative position of the end 304 with respect to the table frame 101. The engaging device can be positioned on opposite sides of the foil trajectory and can comprise suction units.

A first step of the illustrated method according to figure 8a comprises driving tape applicator 104 in direction 172. Tape applicator 104 is moved towards tape applicator 103. Foil 308 is held between the two tape applicators. The foil end 309 extends in the downstream direction beyond the tape applicators. The foil 308/foil end 309 is still in the predetermined position when held on the guidance and cutting table 14. Stop 20-24 can still be locked, locking the foil 308 in position. During or after the first step of the method stop 20-24 is unlocked.

A suitable drive moves tape applicator 104 with respect to carriage sub frame 101.

Tape applicators 103,104 are rotatably held around axis 150,151 with respect to the carriage sub frame 101. Several bearing constructions and drives are possible.

In the illustrated embodiment synchronous rotation of the tape applicators 103,104 is arranged using frame plate 160 that is guided by horizontal guides 161, 162, see figure 2. The guides 161,162 allow frame plate 160 to move in direction 164. Frame plate 160 is connected to servo motor or air cylinder 163.

By moving frame plate 160 in the downstream direction of arrow 164, pin 178 on one end of the tape applicator 103 is engaged, as well is a similar pin on tape applicator 104 (not shown). Tape applicator 103 will rotate according to arrow 171. Simultaneously, a likewise engagement on tape applicator 104 will rotate tape applicator 104 in the opposite direction 173 as shown in figure 8b.

In this embodiment, as tape applicator 104 is moved according to arrow 172, the foil 308 is held between the tape applicators 103,104. Accordingly the rotation of the tape applicators will move the foil 306 in an upstream direction 175. Specifically the rounded surface area 208,209 of the tape applicators will engage on the foil 208. This cylindrical surface area will point contact the foil 308. Foil 106 is still held in the predetermined position.

The tape applicators 103,104 continue to rotate while frame plate 160 moves in direction 164. A blocking pin 168 will prevent further movement of the plate 160 as blocking pin 168 is biased 167 to enter through hole 169. As soon as blocking pin 168 enters the hole 169, further movement/rotation is blocked. This will prevent the two tapes 250,270 from sticking together. Figure 3 shows an air cylinder 175 for operating the pin 168.

Hole 169 is larger than the circumference of pin 168. When pin 168 is received in hole 169, the plate 160 can still be moved in either direction 164 or 165. The orifice of hole 169 provides a domain within which plate 160 can move, and thereby a domain of angles for rotation of the tape applicators 103,104.

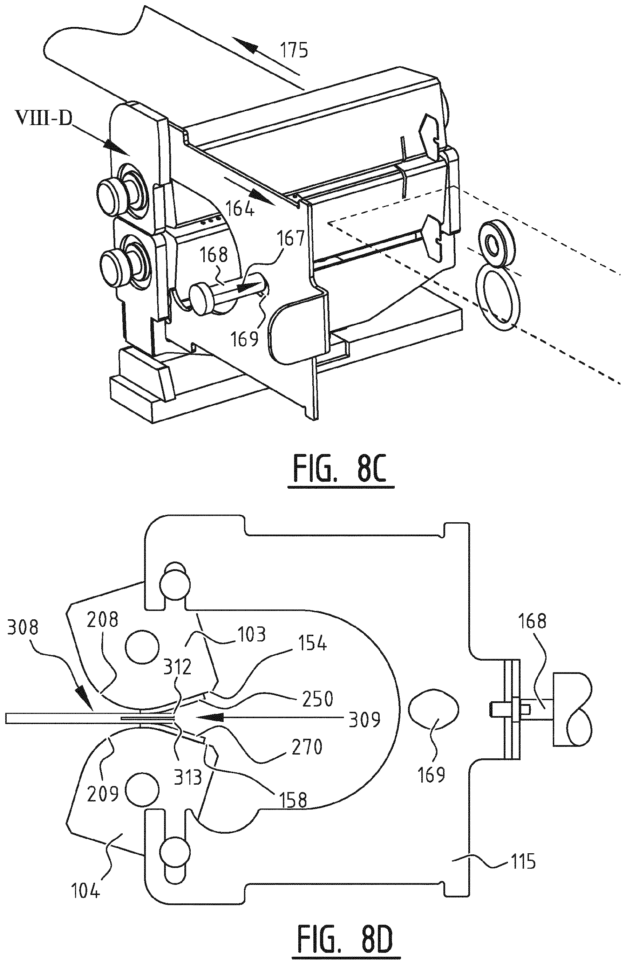

Rotation of the tape applicators 103,104 continues to such an extent, about 75-85°, that the tape receiving surface and tapes 250,270 still held onto the tape receiving surfaces 154,158 will come into contact with the foil 308 and in particular close to foil end 309. A cross sectional view is shown in figure 8d indicated by arrow VIIId in figure 8c.

The adhesive side of tape 250,270 will come into contact with the upper 312 and lower 313 layers of the foil 308/foil end 309 respectively. Tape is now applied to the foil end 309 of one of the foils to be connected using the splicer 1.

Blocking pin 168 prevents the further rotation. As a result rotation of the tape applicators such that tape 250/270 will come in contact with each other is prevented. According to the method the predetermined position of foil end 309 is such that only a part of the tapes 250/270 will come in contact with the respective layers 312,313 of the foil 308. If rotated too far, the tapes would come into contact with each other. The blocking pin 168 prevents rotation beyond the indicated position in Figure 8d.

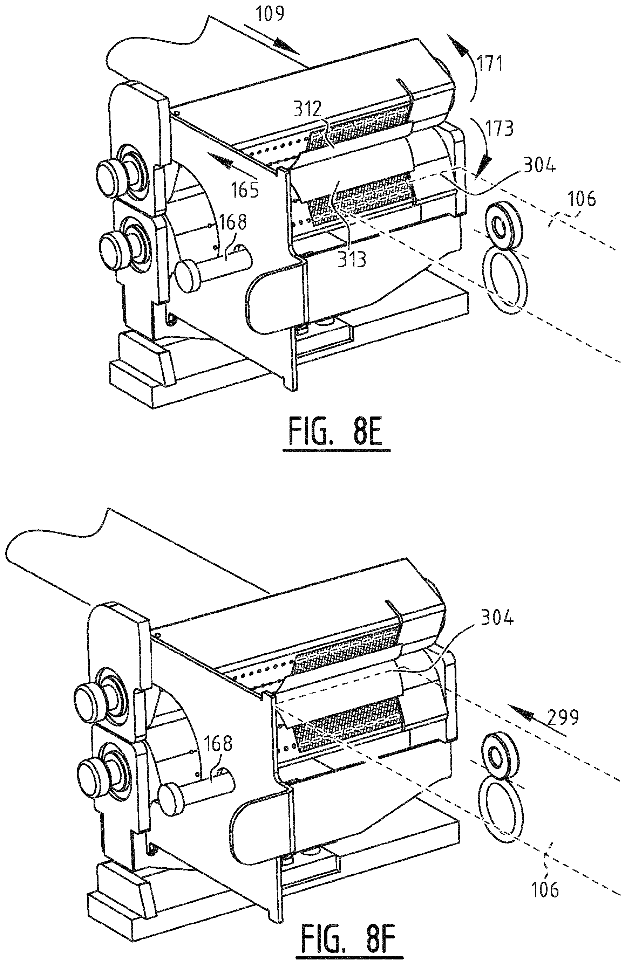

As a result of the adhesive contact a subsequent reverse movement of the frame plate 160 by driving the plate 160 in direction 165 as shown, the engaged layers (or lips) 312,313 and foil 308 will be pulled in a downstream direction as a result of rotation 171/173. The tapes 250,270 will stick to the layers 312,313 opening the mouth of foil end 309 as shown in figure 8e. About 50% of the tape 250,270 is sticks to layers 312,313.

Pin 168 is still extended in figure 8e in hole 169. Hole 169 is shaped such that plate 160 can move and rotation of the tape applicators to the opened mouth position according to Figure 8e can be obtained. Pin 168 delimits the rotation of the tape applicator to e.g. a domain between 45 and 85 degrees.

The opened foil end 309 can now receive the foil end 306 of the first foil 106 still held in a predetermined position between the separated lips. As a result of the predetermined position a drive can feed the 'old' foil 106 in an upstream direction according to arrow 299 into the opened foil end 309 as illustrated in Figure 8f. The method provides for feeding the old foil a predetermined distance in the upstream direction.

The foil end 304 is supported e.g. by table 180 of the foil alignment unit 105. This table, having an edge shortly downstream from the tape applicators 103,104 guides the end 304 into the opened mouth.

The upstream feeding according to arrow 299 is continued in a subsequent step in combination with moving the frame plate 160 and thereby rotating the tape applicators and moving the 'new' foil in an upstream direction 175. Now pin 168 is unbiased (or retracted) and moving of the frame plate is not stopped by the pin 168 entering the through hole 169. Instead the plate 160 is moved beyond the position according to the figure 8d.

Accordingly after feeding the foil 106 in the upstream direction into the opened lips of the new foil 308, feeding in the upstream direction is continued now together with feeding the new foil 308 also in the upstream direction.

Accordingly the invention allows the combined upstream feeding of the old foil 106 and new foil 308 in particular for applying the pieces of tape 154,158, already applied to the leading edge 309 of the new foil, to the 'old' foil 106, thereby making the connection between the foil ends.

As a result the complete tape 250,270 is applied onto the foil ends 309/304. The foil ends 304,309 are connected.

In a subsequent step the tape applicator 104 is moved downwards 172 allowing the foil to freely move between the tape applicators 103,104 and the frame plate 160 is returned to its initial position, rotating the tape applicators back to the initial position, as shown in figure 8h.

In an embodiment the foil 106,308 is provided with markers, e.g. markers along the edge of the foil, e.g. positioned at a predetermined pitch. The markers allow an exact positioning of the foil with respect to a marker sensor positioned along the foil trajectory.

In an embodiment the number of markings is counted, allowing to count whether the supply of foil is running empty, as a reel of foil has a predetermined number of markings at predetermined pitch positioned on the supplied foil. The skilled person will be able to arrange suitable markers, suitable sensors and adapt the above described method for positioning accordingly.

Clearly many embodiments are possible within the scope of the invention.

## Claims

1. Method for connecting two ends of tubular foil by means of adhesive tape comprising:
- supplying a first end (309) of a flattened tubular foil (8), the first end (309) having a first side and a second side;
- providing a second end (304) of tubular foil;
- dispensing tape (205) on a tape receiving surface (153,154) of a tape applicator (103,104);
- holding the tape on the tape receiving surface by suction;
- applying the tape (205) to the first side of the first end (309) of the tubular foil (8) while the tape is being held on the tape receiving surface;
- opening the first end of the flattened tubular foil by moving the tape receiving surface, the tape held thereon and the first side of the first end (309) of the tubular foil (8) attached to the tape from an initial position to an opened position;
- feeding the second end of tubular foil (8) into the opened first end (309) of the tubular foil (8);
- connecting the first end (309) of tubular foil to the second end (304) of tubular foil by moving the tape receiving surface and the first side of the first end of the tubular foil attached to the tape back to the initial position so as to attach the tape held on the tape receiving surface also to the second end (304) of the tubular foil (8).

2. Method as claimed in claim 1, wherein opening the first end comprises moving the tape receiving surface, the tape held thereon and the first side of the first end (309) of the tubular foil (8) attached to the tape away from the second side of the first end of the tubular foil to the opened position; and wherein connecting the first end (309) to the second end (304) comprises moving the tape receiving surface and the first side of the first end (309) of the tubular foil attached to the tape toward the second side to the initial position.

3. Method as claimed in claim 1 or 2, comprising applying tapes on both the first and second side of the tubular foil (8).

4. Method according to claim 1, wherein opening the first end (309) of the tubular foil (8) comprises rotating the tape receiving surface and/or wherein applying the tape (205) to the first end of the tubular foil comprises rotating the tape receiving surface and/or wherein applying the tape (205) comprises moving the tape receiving surface towards the first end of flattened tubular foil and/or wherein connecting the ends of tubular foil comprises rotating the tape receiving surface.

5. Method according to any of the preceding claims, wherein applying tape (205) to or connecting the first and second ends (304,309) comprises partially releasing the tape (205) from the tape receiving surface.

6. Method according to claim 5, wherein the partially released tape (205) is held again on the tape receiving surface after applying the tape to the first end.

7. Method according to any of the preceding claims, wherein the foil ends are connected by two tapes (205) on opposite sides of the flattened tubular foil, wherein applying the tape comprises moving the two tape receiving surfaces towards each other.

8. Device for connecting two ends of tubular foil by means of adhesive tape, the device having:
- a supply (90) configured for supplying a first end (309) of flattened tubular foil, the first end (309) having a first side and a second side; and
- a processing unit (96) configured for tubular foil conveying the foil according to a foil trajectory, the processing unit providing a second end (304) of tubular foil;
- one or more tape applicators (103,104) configured for holding tape on a tape receiving surface (153, 154) by suction, for applying the tape (205) to the first side of the first end (309) of the tubular foil (8) while the tape is being held on the tape receiving surface, for opening the first end (309) of the flattened tubular foil by moving the tape receiving surface, the tape held thereon and the first side of the first end (309) of the tubular foil (8) from an initial position to an opened position, and for the first end (309) of tubular foil to the second end (304) by moving the tape receiving surface and the first side of the first end (309) back to the initial position so as to attach the tape held on the tape receiving surface also to the second end (304) of the tubular foil (8);
wherein the processing unit is further configured to feed the second end of tubular foil (8) into the opened first end (309) of the tubular foil.

9. Device as claimed in claim 8, wherein the one or more tape applicators (103,104) are configured to move the tape receiving surface, the tape held thereon and the first side of the first end (309) of the tubular foil (8) attached to the tape away from the second side of the first end of the tubular foil to the opened position; and/or wherein the one or more tape applicators (103,104) are configured to move the tape receiving surface and the first side of the first end (309) of the tubular foil attached to the tape toward the second side to the initial position.

10. Device according to claim 8 or 9, wherein the tape applicator (103,104) is arranged to open the first end (309) of the tubular foil after applying tape to the first end and prior to the connecting the ends.

11. Device according to claim 8, 9 or 10, wherein the tape applicator (103,104) is mounted rotatably around a tape applicator axis extending generally perpendicular to a transport direction of the foil.

12. Device according to any of claims 8-11, comprising a drive (163) for driving the tape applicator (103,104) around the tape applicator axis, the drive being arranged to rotate the tape applicator in an upstream direction to apply tape to the flattened tubular foil followed by rotation in a downstream direction to open the end of the flattened tubular foil (8), wherein the drive (163) is preferably arranged to rotate the tape applicator in an upstream direction to connect the ends of foil by the tape received on the tape receiving surface.

13. Device according to any of the claims 8-12, wherein the tape applicator (103,104) is of generally tubular form having a generally flat tape receiving surface extending along the tube axis and having a partially cylindrical outer surface along the tube axis adjacent the tape receiving surface, the tape receiving surface (153,154) preferably having one or more tape holders arranged to, when switched on, fix the position of the tape on the tape receiving surface, and wherein the device has a tape dispenser for supplying tape onto the tape receiving surface, the tape surface preferably extending in a dispensing direction of the tape dispenser, generally perpendicular to the foil transport direction.

14. Device according to any of the claims 8-13, wherein at least two tape applicators (103,104) are mounted on opposite sides of the foil trajectory, the tape applicators having generally parallel extending tape receiving surfaces (153,154), wherein the tape applicators are preferably arranged such that the tape applicators can move toward each other enclosing the foil trajectory in between the tape applicators and /or wherein the device comprises a tape applicator stop arranged to prevent the tape applicator to move beyond a predetermined position.

15. Device according to any of the claims 8-14, wherein the at least one tape applicator (103,104) is mounted on a table subframe (94,101) moveable with respect to a frame of the device over a table guide extending generally perpendicular to the foil transport direction and/or wherein the device comprises multiple adjacent reel racks for mounting reels for tubular foil, forming multiple adjacent foil supplies.

## Patentansprüche

1. Verfahren zum Verbinden zweier Enden schlauchörmiger Folie mittels eines Klebebands, wobei das Verfahren aufweist:
- Zuführen eines ersten Endes (309) einer abgeflachten schlauchförmigen Folie (8), wobei das erste Ende (309) eine erste Seite und eine zweite Seite hat;
- Bereitstellen eines zweiten Endes (304) schlauchförmiger Folie;
- Abgeben von Klebeband (205) auf eine Klebebandempfangsoberfläche (153, 154) eines Klebebandapplikators (103, 104);
- Halten des Klebebands auf der Klebebandempfangsoberfläche durch eine Saugwirkung;
- Aufbringen des Klebebands (205) auf die erste Seite des ersten Endes (309) der schlauchförmigen Folie (8), während das Klebeband auf der Klebebandempfangsoberfläche gehalten wird;
- Öffnen des ersten Endes der abgeflachten schlauchförmigen Folie durch Bewegen der Klebebandempfangsoberfläche, des darauf gehaltenen Klebebands und der an dem Klebeband befestigten ersten Seite des ersten Endes (309) der schlauchförmigen Folie (8) von einer Ausgangsposition zu einer geöffneten Position;
- Einführen des zweiten Endes der schlauchförmigen Folie (8) in das geöffnete erste Ende (309) der schlauchförmigen Folie (8);
- Verbinden des ersten Endes (309) schlauchförmiger Folie mit dem zweiten Ende (304) schlauchförmiger Folie durch Bewegen der Klebebandempfangsoberfläche und der an der Klebebandrückseite befestigten ersten Seite des ersten Endes der schlauchförmigen Folie zurück zu der Ausgangsposition, um das auf der Klebebandempfangsoberfläche gehaltene Klebeband auch an dem zweiten Ende (304) der schlauchförmigen Folie (8) zu befestigen.

2. Verfahren nach Anspruch 1, wobei das Öffnen des ersten Endes das Bewegen der Klebebandempfangsoberfläche, des darauf gehaltenen Klebebands und der an dem Klebeband befestigten ersten Seite des ersten Endes (309) der schlauchförmigen Folie (8) weg von der zweiten Seite des ersten Endes der schlauchförmigen Folie zu der geöffneten Position aufweist; und wobei das Verbinden des ersten Endes (309) mit dem zweiten Ende (304) das Bewegen der Klebebandempfangsoberfläche und der an dem Klebeband befestigten ersten Seite des ersten Endes (309) der schlauchförmigen Folie in Richtung der zweiten Seite zu der Ausgangsposition aufweist.

3. Verfahren nach Anspruch 1 oder 2, welches das Aufbringen von Klebebändern sowohl auf die erste als auch die zweite Seite der schlauchförmigen Folie (8) aufweist.

4. Verfahren nach Anspruch 1, wobei das Öffnen des ersten Endes (309) der schlauchförmigen Folie (8) das Drehen der Klebebandempfangsoberfläche aufweist, und/oder wobei das Aufbringen des Klebebands (205) auf das erste Ende der schlauchförmigen Folie das Drehen der Klebebandempfangsoberfläche aufweist, und/oder wobei das Aufbringen des Klebebands (205) das Bewegen der Klebebandempfangsoberfläche in Richtung des ersten Endes abgeflachter schlauchförmiger Folie aufweist, und/oder wobei das Verbinden der Enden schlauchförmiger Folie das Drehen der Klebebandempfangsoberfläche aufweist.

5. Verfahren nach einem der vorhergehenden Ansprüche, wobei das Aufbringen von Klebeband (205) auf oder das Verbinden der ersten und zweiten Enden (302, 309) das teilweise Lösen des Klebebands (205) von der Klebebandempfangsoberfläche aufweist.

6. Verfahren nach Anspruch 5, wobei das teilweise gelöste Klebeband (205) erneut auf der Klebebandempfangsoberfläche gehalten wird, nachdem das Klebeband auf das erste Ende aufgebracht wurde.

7. Verfahren nach einem der vorhergehenden Ansprüche, wobei die Folienenden durch zwei Klebebänder (205) auf entgegengesetzten Seiten der abgeflachten schlauchförmigen Folie verbunden sind, wobei das Aufbringen des Klebebands das Aufeinander-zu-Bewegen der zwei Klebebandempfangsoberflächen aufweist.

8. Vorrichtung zum Verbinden zweier Enden schlauchförmiger Folie mittels eines Klebebands, wobei die Vorrichtung aufweist:
- einen Vorrat (90), der konfiguriert ist, um ein erstes Ende (309) abgeflachter schlauchförmiger Folie zuzuführen, wobei das erste Ende (309) eine erste Seite und eine zweite Seite hat; und
- eine Verarbeitungseinheit (96), die für das Transportieren schlauchförmiger Folie der Folie gemäß einer Folientrajektorie konfiguriert ist, wobei die Verarbeitungseinheit ein zweites Ende (304) schlauchförmiger Folie bereitstellt;
- einen oder mehrere Klebebandapplikatoren (103, 104), die konfiguriert sind, um Klebeband durch eine Saugwirkung auf einer Klebebandempfangsoberfläche (153, 154) zu halten, um das Klebeband (205) auf die erste Seite des ersten Endes (309) der schlauchförmigen Folie (8) aufzubringen, während das Klebeband auf der Klebebandempfangsoberfläche gehalten wird, um das erste Ende der abgeflachten schlauchförmigen Folie durch Bewegen der Klebebandempfangsoberfläche, des darauf gehaltenen Klebebands und der ersten Seite des ersten Endes (309) der schlauchförmigen Folie (8) von einer Ausgangsposition zu einer geöffneten Position zu öffnen, und um das erste Ende (309) schlauchförmiger Folie durch Bewegen der Klebebandempfangsoberfläche und der ersten Seite des ersten Endes (309) zurück zu der Ausgangsposition mit dem zweiten Ende (304) zu verbinden, um das auf der Klebebandempfangsoberfläche gehaltene Klebeband auch an dem zweiten Ende (304) der schlauchförmigen Folie (8) zu befestigen;
wobei die Verarbeitungseinheit ferner konfiguriert ist, um das zweite Ende der schlauchförmigen Folie (8) in das geöffnete erste Ende (309) der schlauchförmigen Folie einzuführen.

9. Vorrichtung nach Anspruch 8, wobei der eine oder die mehreren Klebebandapplikatoren (103, 104) konfiguriert ist/sind, um die Klebebandempfangsoberfläche, das darauf gehaltene Klebeband und die an dem Klebeband befestigte erste Seite des ersten Endes (309) der schlauchförmigen Folie (8) weg von der zweiten Seite des ersten Endes der schlauchförmigen Folie zu der geöffneten Position zu bewegen; und/oder wobei der eine oder die mehreren Klebebandapplikatoren (103, 104) konfiguriert ist/sind, um die Klebebandempfangsoberfläche und die an dem Klebeband befestigten erste Seite des ersten Endes (309) der schlauchförmigen Folie in Richtung der zweiten Seite zu der Ausgangsposition zu bewegen.

10. Vorrichtung nach Anspruch 8 oder 9, wobei der Klebebandapplikator (103, 104) eingerichtet ist, um das erste Ende (309) der schlauchförmigen Folie nach dem Aufbringen von Klebeband auf das erste Ende und vor dem Verbinden der Enden zu öffnen.

11. Vorrichtung nach Anspruch 8, 9 oder 10, wobei der Klebebandapplikator (103, 104) um eine Klebebandapplikatorachse, sich im Allgemeinen senkrecht zu einer Transportrichtung der Folie erstreckt, drehbar montiert ist.

12. Vorrichtung nach einem der Ansprüche 8 - 11, die einen Antrieb (163) zum Antreiben des Klebebandapplikators (103, 104) um die Klebebandapplikatorachse aufweist, wobei der Antrieb eingerichtet ist, um den Klebebandapplikator in einer laufaufwärtigen Richtung zu drehen, um Klebeband auf die abgeflachte schlauchförmige Folie aufzubringen, woraufhin die Drehung in einer laufabwärtigen Richtung folgt, um das Ende der abgeflachten schlauchförmigen Folie (8) zu öffnen, wobei der Antrieb (163) vorzugsweise eingerichtet ist, um den Klebebandapplikator in einer laufaufwärtigen Richtung zu drehen, um die Enden der Folie durch das auf der Klebebandempfangsoberfläche empfangene Klebeband zu verbinden.

13. Vorrichtung nach einem der Ansprüche 8 - 12, wobei der Klebebandapplikator (103, 104) eine im Allgemeinen schlauchförmige Form mit einer im Allgemeinen flachen Klebebandempfangsoberfläche, die sich entlang der Schlauchachse erstreckt, hat und eine teilweise zylindrische Außenoberfläche entlang der Schlauchachse benachbart zu der Klebebandempfangsoberfläche hat, wobei die Klebebandempfangsoberfläche (153, 154) vorzugsweise einen oder mehrere Klebebandhalter hat, die eingerichtet sind, um, wenn sie eingeschaltet sind, die Position des Klebebands auf der Klebebandempfangsoberfläche zu fixieren, und wobei die Vorrichtung einen Klebebandspender zum Zuführen von Klebeband auf die Klebebandempfangsoberfläche hat, wobei die Klebebandempfangsoberfläche sich in einer Abgaberichtung des Klebebandspenders im Allgemeinen senkrecht zu der Folientransportrichtung erstreckt.

14. Vorrichtung nach einem der Ansprüche 8 - 13, wobei wenigstens zwei Klebebandapplikatoren (103, 104) auf entgegengesetzten Seiten der Folientrajektorie montiert sind, wobei die Klebebandapplikatoren sich im Allgemeinen parallel erstreckende Klebebandempfangsoberflächen (153, 154) haben, wobei die Klebebandapplikatoren vorzugsweise derart eingerichtet sind, dass die Klebebandapplikatoren sich aufeinander zu bewegen können, wobei sie die Folientrajektorie zwischen den Klebebandapplikatoren umschließen, und/oder wobei die Vorrichtung einen Klebebandapplikatoranschlag aufweist, der eingerichtet ist, um zu verhindern, dass der Klebebandapplikator sich über eine vorbestimmte Position hinaus bewegt.

15. Vorrichtung nach einem der Ansprüche 8 - 14, wobei der wenigstens eine Klebebandapplikator (103, 104) auf einem Tischuntergestell (94, 101) montiert ist, das in Bezug auf ein Gestell der Vorrichtung über eine Tischführung, die sich im Allgemeinen senkrecht zu der Folientransportrichtung erstreckt, beweglich ist, und/oder wobei die Vorrichtung mehrere benachbarte Rollengestelle zum Montieren von Rollen für schlauchförmige Folie, die mehrere benachbarte Folienvorräte bilden, aufweist.

## Revendications

1. Procédé de liaison de deux extrémités d'une feuille tubulaire au moyen de ruban adhésif comprenant :
la fourniture d'une première extrémité (309) d'une feuille tubulaire aplatie (8), la première extrémité (309) présentant un première face et une seconde face ;
la préparation d'une seconde extrémité (304) de feuille tubulaire ;
la distribution d'une bande (205) sur une surface de réception de bande (153, 154) d'un applicateur de bande (103, 104) ;
le maintien de la bande sur la surface de réception de bande par aspiration ;
l'application de la bande (205) sur la première face de la première extrémité (309) de la feuille tubulaire (8) pendant que la bande est maintenue sur la surface de réception de bande ;
l'ouverture de la première extrémité de la feuille tubulaire aplatie en déplaçant la surface de réception de bande, la bande étant maintenue sur celle-ci et la première face de la première extrémité (309) de la feuille tubulaire (8) fixée sur la bande à partir d'une position initiale vers une position ouverte ;
l'introduction de la seconde extrémité de la feuille tubulaire (8) dans la première extrémité ouverte (309) de la feuille tubulaire (8) ;
la liaison de la première extrémité (309) de la feuille tubulaire sur la seconde extrémité (304) de la feuille tubulaire en déplaçant la surface de réception de bande et la première face de la première extrémité de la feuille tubulaire fixée sur la face arrière de la bande vers la position initiale de manière à fixer la bande maintenue sur la surface de réception de bande aussi sur la seconde extrémité (304) de la feuille tubulaire (8).

2. Procédé selon la revendication 1, dans lequel l'ouverture de la première extrémité comprend le déplacement de la surface de réception de bande, la bande étant maintenue sur celle-ci et la première face de la première extrémité (309) de la feuille tubulaire (8) fixée sur la bande à l'opposé de la seconde face de la première extrémité de la feuille tubulaire vers la position ouverte ; et dans lequel la liaison de la première extrémité (309) sur la seconde extrémité (304) comprend le déplacement de la surface de réception de bande et la première face de la première extrémité (309) de la feuille tubulaire fixée sur la bande vers la seconde face vers la position initiale.

3. Procédé selon la revendication 1 ou 2, comprenant l'application de bandes sur les deux première et seconde faces de la feuille tubulaire (8).

4. Procédé selon la revendication 1, dans lequel l'ouverture de la première extrémité (309) de la feuille tubulaire (8) comprend la rotation de la surface de réception de bande et/ou dans lequel l'application de la bande (205) sur la première extrémité de la feuille tubulaire comprend la rotation de la surface de réception de bande et/ou dans lequel l'application de la bande (205) comprend le déplacement de la surface de réception de bande vers la première extrémité de la feuille tubulaire aplatie et/ou dans lequel la liaison des extrémités de la feuille tubulaire comprend la rotation de la surface de réception de bande.

5. Procédé selon l'une quelconque des revendications précédentes, dans lequel l'application de la bande (205) sur les première et seconde extrémités (304, 309) ou la liaison de celles-ci comprend la séparation partielle de la bande (205) de la surface de réception de bande.

6. Procédé selon la revendication 5, dans lequel la bande partiellement séparée (205) est maintenue contre la surface de réception de bande après l'application de la bande sur la première extrémité.

7. Procédé selon l'une quelconque des revendications précédentes, dans lequel les extrémités de feuille sont reliées par deux bandes (205) sur des faces opposées de la feuille tubulaire aplatie, dans lequel l'application de la bande comprend le déplacement des deux surfaces de réception de bande l'une vers l'autre.

8. Dispositif de liaison de deux extrémités d'une feuille tubulaire au moyen d'une bande adhésive, le dispositif comportant :
une source d'alimentation (90) configurée de manière à délivrer une première extrémité (309) d'une feuille tubulaire aplatie, la première extrémité (309) présentant une première face et une seconde face ; et
une unité de traitement (96) configurée de manière à assurer le transfert de feuille tubulaire de la feuille selon une trajectoire de feuille, l'unité de traitement fournissant une seconde extrémité (304) de feuille tubulaire ;
un ou plusieurs applicateurs de bande (103, 104) configurés de manière à maintenir une bande sur une surface de réception de bande (153, 154) par aspiration, afin d'appliquer la bande (205) sur la première face de la première extrémité (309) de la feuille tubulaire (8) alors que la bande est maintenue sur la surface de réception de bande, afin d'ouvrir la première extrémité (309) de la feuille tubulaire aplatie en déplaçant la surface de réception de bande, la bande étant maintenue sur celle-ci, et la première face de la première extrémité (309) de la feuille tubulaire (8) à partir d'une position initiale vers une position ouverte, et pour la première extrémité (309) de la feuille tubulaire vers la seconde extrémité (304) en renvoyant la surface de réception de bande et la première face de la première extrémité (309) vers la position initiale de manière à fixer la bande maintenue sur la surface de réception de bande aussi sur la seconde extrémité (304) de la feuille tubulaire (8) ;
dans lequel l'unité de traitement est, en outre, configurée de manière à délivrer la seconde extrémité de la feuille tubulaire (8) dans la première extrémité ouverte (309) de la feuille tubulaire.

9. Dispositif selon la revendication 8, dans lequel le ou les applicateurs de bande (103, 104) sont configurés de manière à déplacer la surface de réception de bande, la bande étant maintenue sur celle-ci et la première face de la première extrémité (309) de la feuille tubulaire (8) étant fixée sur la bande à l'opposé de la seconde face de la première extrémité de la feuille tubulaire vers la position ouverte ; et/ou dans lequel le ou les applicateurs de bande (103, 104) sont configurés de manière à déplacer la surface de réception de bande et la première face de la première extrémité (309) de la feuille tubulaire fixée sur la bande vers la seconde face dans la position initiale.

10. Dispositif selon la revendication 8 ou 9, dans lequel l'applicateur de bande (103, 104) est agencé de manière à ouvrir la première extrémité (309) de la feuille tubulaire après application de la bande vers la première extrémité et avant la liaison des extrémités.

11. Dispositif selon la revendication 8, 9 ou 10, dans lequel l'applicateur de bande (103, 104) est monté de manière pouvoir tourner autour d'un axe d'applicateur de bande s'étendant sensiblement perpendiculairement à une direction de transport de la feuille.

12. Dispositif selon l'une quelconque des revendications 8 à 11, comprenant un dispositif d'entraînement (163) destiné à entraîner l'applicateur de bande (103, 104) autour de l'axe d'applicateur de bande, le dispositif d'entraînement étant agencé afin de faire tourner l'applicateur de bande vers l'amont de manière à appliquer la bande sur la feuille tubulaire aplatie suivi par la rotation vers l'aval afin d'ouvrir l'extrémité de la feuille tubulaire aplatie (8), dans lequel le dispositif d'entraînement (163) est, de préférence, agencé afin de faire tourner l'applicateur de bande vers l'amont de manière à relier les extrémités de la feuille par la bande reçue sur la surface de réception de bande.

13. Dispositif selon l'une quelconque des revendications 8 à 12, dans lequel l'applicateur de bande (103, 104) est d'une forme sensiblement tubulaire présentant une surface de réception de bande sensiblement plate s'étendant le long de l'axe de tube et présentant une surface externe partiellement cylindrique le long de l'axe de tube adjacent à la surface de réception de bande, la surface de réception de bande (153, 154) présentant, de préférence, un ou plusieurs supports de bande agencés de manière à, lorsqu'ils sont activés, fixer la position de la bande sur la surface de réception de bande, et dans lequel le dispositif comporte un distributeur de bande destiné à délivrer une bande sur la surface de réception de bande, la surface de bande s'étendant, de préférence, dans une direction de distribution du distributeur de bande, sensiblement perpendiculaire à la direction de transport de feuille.

14. Dispositif selon l'une quelconque des revendications 8 à 13, dans lequel au moins deux applicateurs de bande (103, 104) sont montés sur des côtés opposés de la trajectoire de feuille, les applicateurs de bande comportant des surfaces de réception de bande s'étendant sensiblement parallèlement (153, 154), dans lequel les applicateurs de bande sont, de préférence, agencés de telle sorte que les applicateurs de bande peuvent se déplacer l'un vers l'autre entourant la trajectoire de feuille entre les applicateurs de bande et/ou dans lequel le dispositif comprend une butée d'applicateur de bande agencée de manière à empêcher l'applicateur de bande de se déplacer au delà d'une position prédéterminée.

15. Dispositif selon l'une quelconque des revendications 8 à 14, dans lequel au moins un applicateur de bande (103, 104) est monté sur un bâti secondaire de table (94, 101) pouvant être déplacé par rapport à un bâti du dispositif sur un guide de table s'étendant sensiblement perpendiculairement à la direction de transport de feuille et/ou dans lequel le dispositif comprend des support de rouleau multiples adjacents afin de monter des rouleaux pour feuille tubulaire, formant des sources de feuille multiples adjacentes.
